(19) Europäisches Patentamt
European Patent Office
Office européen des brevets

(11) EP 3 597 685 A1

(12) EUROPEAN PATENT APPLICATION

(43) Date of publication:
**22.01.2020 Bulletin 2020/04**

(21) Application number: **18184332.7**

(22) Date of filing: **19.07.2018**

(51) Int Cl.:
***C08G 18/48*** *(2006.01)* ***C08G 18/50*** *(2006.01)*
***C08G 18/76*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

# (54) RIGID POLYURETHANE FOAMS

(57) The present invention relates to a rigid polyurethane foam for a discontinuous production process and a polyurethane composite panel, as well as use of the rigid polyurethane foam in insulation. The rigid polyurethane foam is made from a reaction system comprising an isocyanate component and a polyol component, wherein the polyol component includes at least one long-chain polyether polyol having a functionality of 2 to 3 and a number average molecular weight of 1500 to 5000, blowing agents, catalysts etc.. The polyurethane foam of the present invention has unexpectedly satisfactory dimensional stability and adhesion strength, as well as other good physical properties.



Printed by Jouve, 75001 PARIS (FR)

## Description

### Technical field

The present invention relates to a rigid polyurethane foam for a discontinuous production process, a polyurethane composite panel and a method for producing the polyurethane composite panel, as well as use of the polyurethane foam in insulation.

### Background

Recently, polyurethane composite materials containing polyurethane foams prepared by discontinuous processes have been widely used in the insulation of household appliances such as refrigerators, freezers, water heaters and the like. However, during the process of preparing the polyurethane composite materials, there are often problems such as poor dimensional stability of the polyurethane foams, poor adhesion between the foams and the surface materials, and the like, which seriously affect the quality of the final products.

CN102875833A discloses a blowing agent composition, a rigid polyurethane foam, a preparation method, a refrigeration device, and an insulating component. The blowing agent composition comprises: 5 to 20 parts by weight of pentane; 1 to 25 parts by weight of 245fa; and 0 to 5 parts by weight of 134a. By using this blowing agent composition, a rigid polyurethane foam can be efficiently produced.

CN103819644A discloses a heat insulating polyurethane material for pipelines with good fluidity and a preparation method thereof, wherein a combined polyol system consisting of a polyether polyol 1 having a functionality of 2 to 6, a number average molecular weight of 500 to 1000 and a hydroxyl number of 300 to 600 mg KOH/g, a polyether polyol 2 having a functionality of 2 to 3, a number average molecular weight of 400 to 1500 and a hydroxyl number of 200 to 300 mg KOH/g, and a polyether polyol 3 having a functionality of 2 to 3, a number average molecular weight of 2000 to 7000 and a hydroxyl number of 30 to 150 mg KOH/g is used. The foam prepared has a compressive strength of greater than 300 KPa, a thermal conductivity of less than 0.033 w/m.k, water absorption of less than 8%, and open porosity of less than 8%. The foam does not shrink at a high temperature of 140°C for 96 hours, and the foam heat loss is less than 3%. The resultant foam has good fluidity, and produces an increased volume by about 2% to 3% when compared with the conventional formulation.

CN104672426A discloses a polyurethane composition, a polyurethane foam, a preparation method thereof and a refrigerator. The polyurethane composition is prepared from the following raw materials in parts by weight: 25 to 60 parts by weight of sorbitol polyether polyol, 15 to 40 parts by weight of combined polyether polyols, 3 to 30 parts by weight of diphenylmethanediamine polyether polyol, 3 to 15 parts by weight of glycerol polyether polyol, 3 to 20 parts by weight of aromatic polyester polyol, 0 to 5 parts by weight of combined cross-linking agents, 1 to 55 parts by weight of a blowing agents, 1.0 to 5.0 parts by weight of a foam stabilizer, 0.5 to 2.0 parts by weight of water, 1.0 to 3.5 parts by weight of combined catalysts, and 120 to 160 parts by weight of an isocyanate; wherein the isocyanate index is from 0.95 to 1.10. The polyurethane composition provided by this technical solution has a low density, a low thermal conductivity, and a strong adhesion performance. The refrigerator containing such a polyurethane composition exhibits good insulation and low energy consumption.

In spite of the above disclosures, the industry is still in urgent need of a polyurethane foam with good insulation performance, good dimensional stability, and better adhesion to the surface layer materials.

### Summary of the Invention

In one aspect of the present invention, there is provided a rigid polyurethane foam for a discontinuous production process. The foam is made from a reaction system comprising the following components:

an isocyanate component A;

a component B comprising:

polyols B1 having a functionality of 2 to 8 and a number average molecular weight of 400 to 1500 g/mol and 1 to 7 pbw, based on component B except blowing agents, long-chain polyether polyols B2, including at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008);

blowing agents; and

catalysts.

The isocyanates of the present invention are preferably poly-MDI.

The polyols B1 preferably comprise:

B1-1) 60 to 90 wt%, based on the mass of component B, of a polyether polyol started with sucrose or sorbitol having a functionality of 4 to 8 and a number weight of molecular weight of 400~1500g/mol (test method according to GB/T 21863-2008);

B1-2) 10 to 40 wt%, based on the mass of component B, of a polyether polyol started with *o*-toluenediamine having a functionality of 4 and a number weight of molecular weight of 500~750g/mol (test method according to GB/T 21863-2008).

The blowing agents can be used in the present invention including but not limited to, pentafluorobutane, pentafluoropropane, chlorotrifluoropropene, hexafluorobutene, monofluorodichloroethane, pentafluorobutane, pentafluoropropane, butane, pentane, cyclopentane, hexane, cyclohexane, heptane or any mixtures thereof. The blowing agents preferably include cyclopentane in an amount of 0 to 25 pbw, preferably 5 to 20 pbw, and particularly preferably 8 to 15 pbw.

The component B of the reaction system of the polyurethane foam of the present invention preferably further comprises 0.10 to 3.50 wt%, preferably 0.5 to 2.8 wt%, and particularly preferably 1.5 to 2.6 wt% of water, based on the mass of component B.

The component B of the reaction system of the polyurethane foam of the present invention preferably comprises at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008). The long-chain polyether polyols have a functionality of preferably 2 and a number average molecular weight of 1500 to 4000 g/mol, preferably 1500 to 3000 g/mol, and particularly preferably 1800 to 2500 g/mol (test method according to GB/T 21863-2008). They have a content of preferably 1 to 5 pbw, particularly preferably 1 to 3 pbw. It is well known to those skilled in the art that the long-chain polyether polyols have the problem of being difficult to be miscible with the blowing agents, thereby resulting in uneven foaming. Therefore, long-chain polyether polyols are generally not useful in the related foam systems. However, the specific polyether system according to the present invention overcomes the above shortcomings of the long-chain polyether polyols, so that the resultant foam has excellent dimensional stability and also satisfactory adhesion performance.

The catalysts of the present invention preferably include blowing catalyst, gelation catalysts, and trimer catalyst. Among them, the blowing catalyst are preferably selected from one of pentamethyldiethylenetriamine, bis-dimethylaminoethylether, N,N,N',N'-tetramethylethylenediamine, N,N,N',N'-tetramethylbutylenediamine and tetramethylhexamethylenediamine or any mixtures thereof; the gelation catalysts are preferably selected from one of dimethylcyclohexylamine and dimethylbenzylamine or any mixtures thereof; the trimer catalyst are preferably selected from one of methylammonium salts, ethylammonium salts, octylammonium salts or hexahydrotriazines and organometallic bases or any mixtures thereof. The catalysts have a content of preferably 0.50 to 4.00 pbw.

The foam of the present invention further comprises surfactants, preferably silicone oil, in an amount of 0.1 to 5.0 wt%, preferably 0.5 to 4.0 wt%, and particularly preferably 1.5 to 3.0 wt%, based on the mass of component B.

The isocyanates of the present invention have a NCO index of 105 to 140, preferably 105 to 130, and particularly preferably 110 to 120.

The polyurethane foam of the present invention has a core density of 25 to 60 kg/$m^3$, preferably 25 to 50 kg/$m^3$, and particularly preferably 25 to 40 kg/$m^3$ (test method according to ASTM D 1622-03).

The polyurethane foam of the present invention has a thermal conductivity of preferably less than 22 mW/M.K (25°C) (as measured according to GB/T 10295-2008).

The polyurethane foam of the present invention has a compressive strength of >110 kPa, preferably >130 kPa, and particularly preferably >140 kPa (test method according to GB8813-2008).

The polyurethane foam of the present invention has a pressure tank shrinkage of <10.0%, preferably <6.0%, and particularly preferably <3.0%.

The polyurethane foam of the present invention has an adhesion strength of preferably >0.20N/$cm^2$, more preferably >0.24N/$cm^2$ (test method according to the description in the Examples, with the adhesion strength characterized by the measured maximum tensile force).

Through experiments, we have unexpectedly found that the specific polyurethane foam system consisting of the polyether polyol system, blowing agents, catalysts and surfactants according to the present invention overcomes technical prejudice and the resultant foam exhibits excellent dimensional stability and adhesion performance. Furthermore, when compared with existing products, it also reduces raw material costs.

In another aspect of the present invention, there is provided a polyurethane composite panel comprising two

surface layers and a polyurethane foam layer located between the two surface layers, wherein the polyurethane foam is made from a reaction system comprising the following components:

an isocyanate component A;

a component B comprising:

polyols B1 having a functionality of 2 to 8 and a number average molecular weight of 400 to 1500 g/mol and 1 to 7 pbw, based on component B except blowing agents, long-chain polyether polyols B2, including at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008);

blowing agents; and

catalysts.

The isocyanates of the present invention are preferably poly-MDI.

The polyols B1 of the present invention preferably include:

B1-1) 60 to 90 wt%, based on the mass of component B, of a polyether polyol started with sucrose or sorbitol having a functionality of 4 to 8 and a number weight of molecular weight of 400~1500g/mol (test method according to GB/T 21863-2008);

B1-2) 10 to 40 wt%, based on the mass of component B, of a polyether polyol started with *o*-toluenediamine having a functionality of 4 and a number weight of molecular weight of 500~750g/mol (test method according to GB/T 21863-2008).

The two surface layers of the polyurethane composite panel according to the present application are made of material(s) selected from iron, aluminum, FRP, PS, and ABS.

In yet another aspect of the present invention, there is provided a method for preparing a polyurethane composite panel, comprising the steps of:

fixing the two surface layers; and

injecting the polyurethane reaction system between the two surface layers, wherein the polyurethane composite panel is obtained after reaction, foaming and molding of the polyurethane reaction system.

In the method for preparing a polyurethane composite panel according to the present application, the two surface layers are preferably fixed by a mold containing an upper cover and a lower cover, and the two surface layers are respectively fixed on the inner surface of the upper cover and on the inner surface of the lower cover.

In yet another aspect of the present invention, there is provided use of the aforementioned polyurethane foam for producing an insulation device.

In yet another aspect of the present invention, there is provided an insulation device. The insulation device comprises the aforementioned polyurethane foam or polyurethane composite panel. The device can be a freezer, a refrigerator, a cooler, a water heater and the like.

**Detailed Description**

The following terms used in the present invention have the following definitions or explanations.

The term "adhesion strength" refers to the strength when a load is applied to the adhesion area to break it up.

The term "thermal conductivity" refers to the amount of heat transferred per square meter of area by unit thickness of material within unit temperature difference and time under constant heat transfer conditions.

The term "free foam density" refers to the density of the foam core tested after a polyurethane reaction system freely rises in the normal atmosphere until the end of the reaction.

The term "core density" refers to the density of the foam core, i.e., the density of the molded foam core, tested in the case of excessive filling in the mold used during the preparation of the polyurethane composite panel.

The term "pbw" refers to the mass fraction of each component of the polyurethane reaction system.

The term "functionality" refers to the value determined according to the industry formula: functionality = hydroxyl number * molecular weight / 56100, wherein the molecular weight is determined by GPC high performance liquid chromatography.

The term "isocyanate index" refers to the value calculated by the following formula:

isocyanate Index (%) = (mole number of isocyanate groups (NCO groups) in the component A) / (mole number of isocyanate groups (NCO groups) in the component B) X 100%。

**Components of the polyurethane foam reaction system**

**A) Polyisocyanates**

Any organic polyisocyanates can be used to prepare the rigid polyurethane foams of the present invention, including aromatic, aliphatic and alicyclic polyisocyanates, and combinations thereof. The polyisocyanates can be represented by the general formula R(NCO)n, wherein R represents an aliphatic hydrocarbon group having 2 to 18 carbon atoms, an aromatic hydrocarbon group having 6 to 15 carbon atoms, or an araliphatic hydrocarbon group having 8 to 15 carbon atoms, and n = 2 to 4.

Useful polyisocyanates include, but are not limited to, vinyl diisocyanate, tetramethylene 1,4-diisocyanate, hexane diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrodiphenylmethane-2,4-diisocyanate, perhydrodiphenylmethane-4,4-diisocyanate, phenylene-1,3-diisocyanate, phenylene-1,4-diisocyanate, diphenylethylene-1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanates and/or their homologues having more rings, polyphenyl polymethylene polyisocyanate (polymeric MDI), naphthylene-1,5-diisocyanate (NDI), their isomers, any mixtures of them and their isomers.

Useful polyisocyanates also include isocyanates modified by carbodiimide, allophanates, or isocyanates, preferably but not limited to, diphenylmethane diisocyanates, diphenylmethane diisocyanates modified by carbodiimide, their isomers, mixtures of them and their isomers.

The polyisocyanates, when used in the present invention, include isocyanate dimers, trimers, tetramers, or combinations thereof.

In a preferred embodiment of the present invention, the polyisocyanate component is selected from poly-MDI.

The organic polyisocyanates of the present invention have a NCO content of 20 to 33 wt%, preferably 25 to 32 wt%, and particularly preferably 30 to 32 wt%. The NCO content is measured according to GB/T 12009.4-2016.

The organic polyisocyanates can also be used in the form of polyisocyanate prepolymers. These polyisocyanate prepolymers can be obtained by reacting an excess of the aforementioned organic polyisocyanates with a compound having at least two isocyanate-reactive groups at a temperature of, for example, 30 to 100°C, preferably about 80°C. The polyisocyanate prepolymers of the present invention have an NCO content of 20 to 33 wt%, preferably 25 to 32 wt%. The NCO content is measured according to GB/T 12009.4-2016.

**B) Polyols**

The polyols of the present invention can be polyether polyols, polyester polyols, polycarbonate polyols, and/or mixtures thereof.

The polyols of the present invention are preferably one or more polyether polyols, wherein at least one polyether polyol is started with an amine. The polyether polyols have a functionality of 2 to 8, preferably 3 to 6, and a hydroxyl number of 50 to 1200, preferably 200 to 800.

The polyether polyols can be prepared by known processes. Usually, ethylene oxide or propylene oxide is available for preparation by using ethylene glycol, 1,2-propylene glycol, 1,3-propylene glycol, diethylene glycol, glycerol, trimethylolpropane, pentaerythritol, triethanolamine, toluenediamine, sorbitol, sucrose, or any combinations thereof as a starter.

In addition, the polyether polyols can also be prepared by reacting at least one alkylene oxide containing 2 to 4 carbon atoms with a compound containing 2 to 8, preferably but not limited to 3 to 8 active hydrogen atoms or another reactive compound in the presence of a catalyst.

Examples of the catalyst are alkali metal hydroxides such as sodium hydroxide, potassium hydroxide, or alkali

metal alkoxides such as sodium methoxide, sodium ethoxide, potassium ethoxide, or potassium isopropoxide.

Useful alkylene oxides include, but are not limited to, tetrahydrofuran, ethylene oxide, 1,2-propylene oxide, 1,2-butylene oxide, 2.3-butylene oxide, styrene oxide, and any mixtures thereof.

Useful compounds containing active hydrogen atoms include polyhydroxylic compounds, preferably but not limited to water, ethylene glycol, 1,2-propylene glycol, 1,3-propylene glycol, diethylene glycol, trimethylolpropane, any mixtures thereof. More preferred are polyols, especially triols or higher alcohols, such as glycerol, trimethylolpropane, pentaerythritol, sorbitol and sucrose. Useful compounds containing active hydrogen atoms also include, but are not limited to, organic dicarboxylic acids such as succinic acid, adipic acid, phthalic acid, and terephthalic acid, or aromatic or aliphatic substituted diamines such as ethylenediamine, diethylenetriamine, triethylenetetramine, propylenediamine, butylenediamine, hexamethylenediamine or toluenediamine.

Other useful reactive compounds include ethanolamine, diethanolamine, methylethanolamine, ethylethanolamine, methyldiethanolamine, ethyldiethanolamine, triethanolamine, and ammonia.

The polyether polyols prepared by using an amine as a starter include the compound obtained by reacting an amine as a starter with an alkylene oxide compound.

As used herein, the term "alkylene oxide compound" generally refers to those having the general formula (I):

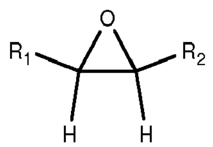

(I)

wherein $R_1$ and $R_2$ are independently selected from H, $C_1$-$C_6$ linear and branched alkyl, as well as phenyl and substituted phenyl.

Preferably, $R_1$ and $R_2$ are independently selected from H, methyl, ethyl, propyl and phenyl.

The method for preparing the "alkylene oxide compound" is known to those skilled in the art, and it can be obtained, for example, by an oxidation reaction of an olefine compound.

Examples of the alkylene oxide compound useful in the present invention include, but are not limited to, ethylene oxide, 1,2-propylene oxide, 1,2-butylene oxide, 2,3-butylene oxide, styrene oxide, or a mixture thereof, particularly preferably a mixture of ethylene oxide and 1,2-propylene oxide.

As used herein, the term "alkylene oxide compound" also includes oxacycloalkanes, examples of which include, but are not limited to, tetrahydrofuran and oxetane.

When used herein, the "amine" refers to a compound containing a primary amino group, a secondary amino group, a tertiary amino group, or a combination thereof. Examples of the amine useful in the present invention include, but are not limited to, triethanolamine, ethylenediamine, toluenediamine, diethylenetriamine, triethylenetetramine, and derivatives thereof, preferably ethylenediamine, toluenediamine, particularly preferably toluenediamine.

Examples of the polyether polyols useful in the present invention are polyether polyols started with an aromatic amine, preferably propylene oxide-based polyether polyol started with diphenylmethanediamine. The polyether polyols of the present invention comprise at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008).

Preferably, the difunctional polyether polyols useful in the present invention have a hydroxyl number of 30 to 100 mg KOH/g (determined according to GB/T 12008.3-2009), a content of 1 to 5 pbw, preferably 1 to 3 pbw, and a viscosity of <600 mPa·s, preferably <400 mPa·s at 25°C. In one embodiment of the present invention, part of the polyether polyols is selected from polyether polyols started with 1,2-propylene glycol or 1,3-propylene glycol, more preferably propylene oxide-based polyether polyol started with 1,2-propylene glycol.

In one embodiment of the present invention, part of the polyether polyols is selected from polyether polyols started with sucrose, sorbitol, more preferably propylene oxide-based polyether polyols started with sucrose, sorbitol.

The polyether polyol composition comprising the aforementioned polyether polyols has a functionality of 3.5 to 6, preferably 4.0 to 5.5, and a hydroxyl number of 280 to 450 mg KOH/g, preferably 330 to 420 mg KOH/g.

In one embodiment of the present invention, the polyols of the present invention comprise at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008). In some embodiments, the polyols comprise long-chain polyether polyols having a functionality of 2 and a number average molecular weight of 1500 to 4000 g/mol, preferably 1500 to 3000 g/mol, and particularly preferably 1800 to 2500 g/mol (test method according to GB/T 21863-2008). They have a content of 1 to 5 pbw, preferably 1 to 3 pbw. It is well known to those skilled in the art that the long-chain polyether polyols have the problem of being difficult to be miscible with the blowing agents, thereby resulting in uneven foaming. Therefore, long-chain polyether polyols are

generally not useful in the related foam systems. Through experiments, we have unexpectedly found that the polyurethane foam system according to the present invention overcomes the above shortcomings of the long-chain polyether polyols, so that the resultant foam has excellent dimensional stability and also satisfactory adhesion performance.

The polyester polyols are prepared by reacting a dicarboxylic acid or a dicarboxylic anhydride with a polyol. The dicarboxylic acid is preferably, but not limited to, an aliphatic carboxylic acid having 2 to 12 carbon atoms, for example: succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, and mixtures thereof. The dicarboxylic anhydride is preferably, but not limited to, phthalic anhydride, tetrachlorophthalic anhydride, maleic anhydride, and mixtures thereof. The polyol is preferably, but not limited to, ethylene glycol, diethylene glycol, 1,2-propylene glycol, 1,3-propylene glycol, dipropylene glycol, 1,3-methylpropanediol, 1,4-butanediol, 1,5-pentanediol, 1,6-hexanediol, neopentyl glycol, 1,10-decanediol, glycerol, trimethylolpropane, or mixtures thereof. The polyester polyols also include those made from lactones. The polyester polyols made from lactones are preferably, but not limited to, those made from ε-caprolactone.

The polycarbonate polyols are preferably, but not limited to, polycarbonate diols. The polycarbonate diols can be prepared by reacting a diol with a dialkyl or diaryl carbonate or phosgene. The diol is preferably, but not limited to, 1,2-propylene glycol, 1,3-propylene glycol, 1,4-butanediol, 1,5-pentanediol, 1,6-hexanediol, diethylene glycol, s-trioxane glycol or mixtures thereof. The dialkyl or diaryl carbonate is preferably, but not limited to, diphenyl carbonate.

**Blowing agents**

The blowing agents useful in the present invention can be various physical blowing agents or chemical blowing agents.

Useful blowing agents include water, halogenated hydrocarbons, hydrocarbon compounds and the like. Useful halogenated hydrocarbons are preferably pentafluorobutane, pentafluoropropane, chlorotrifluoropropene, hexafluorobutene, HCFC-141b (monofluorodichloroethane), HFC-365mfc (pentafluorobutane), HFC-245fa (pentafluoropropane) or any mixtures thereof. Useful hydrocarbon compounds include preferably butane, pentane, cyclopentane (CP), hexane, cyclohexane, heptane, and any mixtures thereof.

The blowing agents of the present invention are preferably cyclopentane in an amount of 0 to 25 pbw, preferably 5 to 20 pbw, and particularly preferably 8 to 15 pbw.

**Catalysts**

The blowing catalyst among the catalysts of the present invention are selected from one of pentamethyldiethylenetriamine, bis-dimethylaminoethylether, N,N,N',N'-tetramethylethylenediamine, N,N,N',N'-tetramethylbutylenediamine and tetramethylhexamethylenediamine or any mixtures thereof; the gel catalysts are selected from one of dimethylcyclohexylamine and dimethylbenzylamine or any mixtures thereof; the trimer catalyst are selected from one of methylammonium salts, ethylammonium salts, octylammonium salts or hexahydrotriazines and organometallic bases or any mixtures thereof. The catalysts of the present application have a content of preferably 0.50 to 4.00 pbw.

In one embodiment of the present invention, the reaction system of the polyurethane foam of the present invention further comprises water, wherein water has a content of 0.1 to 3.5 wt%, preferably 0.5 to 2.8 wt%, and particularly preferably 1.5 to 2.6 wt%, based on the mass of component B.

In one embodiment of the present invention, the reaction system of the polyurethane foam of the present invention further comprises surfactants, wherein the surfactants are preferably, but not limited to, an ethylene oxide derivative of siloxane. The surfactants are used in an amount of 0.1 to 5.0 wt%, preferably 0.5 to 4.0 wt%, and particularly preferably 1.5 to 3.0 wt%, based on the mass of component B.

Through experiments, we have unexpectedly found that the specific polyurethane foam system consisting of the polyether polyol system, blowing agents, catalysts and surfactants according to the present invention overcomes technical prejudice and the resultant foam exhibits excellent dimensional stability and adhesion performance. Furthermore, when compared with existing products, it also reduces raw material costs.

**Polyurethane foams**

In one embodiment of the present invention, the polyurethane foam has a core density of 25 to 60 $kg/m^3$, preferably 25 to 50 $kg/m^3$, and particularly preferably 25 to 40 $kg/m^3$ (test method according to ASTM D 1622-03).

In one embodiment of the present invention, the polyurethane foam has a thermal conductivity of less than 22 mW/M.K (25°C) (as measured according to GB/T 10295-2008). In one embodiment of the present invention, the polyurethane foam has a compressive strength of >110 kPa, preferably >130 kPa, and particularly preferably >140 kPa (test method according to GB8813-2008).

In one embodiment of the present invention, the polyurethane foam has a pressure tank shrinkage of <10.0%, preferably <6.0%, and particularly preferably <3.0%.

In one embodiment of the present invention, the polyurethane foam has a adhesion strength of >0.20N/cm2, preferably >0.24N/cm2 (test method according to the description in the Examples, with the adhesion strength characterized by the measured maximum tensile force).

**Polyurethane composite panels**

The polyurethane composite panel of the present invention comprises two surface layers and a polyurethane foam layer located between the two surface layers, wherein the polyurethane foam is made from a reaction system comprising the following components:

an isocyanate component A;

a component B comprising:

polyols B1 having a functionality of 2 to 8 and a number average molecular weight of 400 to 1500 g/mol and 1 to 7 pbw, based on component B except blowing agents, long-chain polyether polyols B2, including at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008);

blowing agents; and

catalysts.

In one embodiment of the present invention, the polyols B1 used include:

B1-1) 60 to 90 wt%, based on the mass of component B, of a polyether polyol started with sucrose or sorbitol having a functionality of 4 to 8 and a number weight of molecular weight of 400~1500g/mol (test method according to GB/T 21863-2008);

B1-2) 10 to 40 wt%, based on the mass of component B, of a polyether polyol started with *o*-toluenediamine having a functionality of 4 and a number weight of molecular weight of 500~750g/mol (test method according to GB/T 21863-2008).

Preferably, the long-chain polyether polyols B2 are choosing from:

B2-1) 1~5 pbw and preferably 1~3 pbw, based on the mass of component B except blowing agents, of long chain polyether polyol, having a functionality of 2, a number weight of molecular weight of 1800~4000g/mol, preferably of 1500~3000g/mol, more preferably of 1800~2500g/mol (test method according to GB/T 21863-2008) .

B2-2) 1~5 pbw and preferably 1~3 pbw, based on the mass of component B except blowing agents, of long chain polyether polyol, having a functionality of 3, a number weight of molecular weight of 1800~5000g/mol, preferably of 1800~4000g/mol, more preferably of 2500~3500g/mol (test method according to GB/T 21863-2008).

In one embodiment of the present invention, the long-chain polyether polyols used have a functionality of 2 and a number average molecular weight of 1500 to 4000 g/mol, preferably 1500 to 3000 g/mol, and particularly preferably 1800 to 2500 g/mol (test method according to GB/T 21863-2008). They have a content of preferably 1 to 5 pbw, particularly preferably 1 to 3 pbw. It is well known to those skilled in the art that the long-chain polyether polyols have the problem of being difficult to be miscible with the blowing agents, thereby resulting in uneven foaming. Therefore, long-chain polyether polyols are generally not useful in the related foam systems. However, the specific polyether system according to the present invention overcomes the above shortcomings of the long-chain polyether polyols, so that the resultant foam has excellent dimensional stability and also satisfactory adhesion performance. Through experiments, we have unexpectedly found that when the long-chain polyether polyols have a content within the preferred range, the resultant foam has better dimensional stability and adhesion performance. Moreover, we have unexpectedly found that the specific contents of the aforementioned catalysts, water, surfactants and the like allow the obtained polyurethane foam to have satisfactory dimensional stability and adhesion performance, thereby saving costs and increasing production efficiency.

The two surface layers of the polyurethane composite panel according to the present application are made of material(s) selected from iron, aluminum, FRP, PS, and ABS.

**Method for preparing a polyurethane composite panel**

The method for preparing a polyurethane composite panel according to the present invention comprises the steps of:

fixing the two surface layers; and

injecting the polyurethane reaction system between the two surface layers, wherein the polyurethane composite panel is obtained after reaction, foaming and molding of the polyurethane reaction system.

In the method for preparing a polyurethane composite panel according to the present application, the two surface layers are preferably fixed by a mold containing an upper cover and a lower cover, and the two surface layers are respectively fixed on the inner surface of the upper cover and on the inner surface of the lower cover.

The method for preparing a polyurethane composite panel according to the present invention preferably uses a discontinuous production process. The composite panel usually includes a cavity and polyurethane foam filled in the cavity. The cavity is made of metals, plastics, composite panels and the like. A shell part can be firstly prepared, and then the joint position of the shell part is subject to a sealing treatment with an injection hole and a vent hole reserved, and finally the shell part is placed in a foaming mold and the polyurethane composition is applied into the cavity of the shell part through the injection holes of the mold and the shell part. After the foaming reaction of the polyurethane composition is completed, the polyurethane composite material can be obtained when the foamed article is removed from the mold.

In some embodiments of the present invention, the cavity has a panel shape, a U-shape or a hollow cylindrical shape.

**Use of the polyurethane foam for producing an insulation device**

The present invention also provides the use of the aforementioned polyurethane foam for producing an insulation device. In other embodiments of the present invention, the polyurethane composite materials prepared by a discontinuous process are used in household appliances such as refrigerators, freezers, and water heaters.

**Insulation devices**

The insulation device of the present invention comprises the aforementioned polyurethane foam or polyurethane composite panel. The insulation device can be a refrigerator, a freezer, a cooler, a water heater and the like.

**Examples**

Raw materials (viscosity at 25°C: mPa·s):

NJ4110A, PO-type polyether polyol started with sucrose, purchased from Jurong Ningwu New Material Co., Ltd., hydroxyl number: 430, viscosity: 3000;

NJ 635C, PO-type polyether polyol started with sorbitol, purchased from Jurong Ningwu New Material Co., Ltd., hydroxyl number: 500, viscosity: 5800;

NJ380, PO-type polyether polyol started with sucrose and PG, purchased from Jurong Ningwu New Material Co., Ltd., hydroxyl number: 380, viscosity: 11250;

Desmophen 24HK69, PO-type polyether polyol started with o-TDA, purchased from Covestro Polymers Co., Ltd., hydroxyl number: 360, viscosity: 26500;

ZSN 220, PO-type polyether polyol started with PG or DEG, purchased from Jiangsu Zhongshan Chemical Co., Ltd., hydroxyl number: 56, viscosity: 300;

ZSN 330, PO-type polyether polyol started with glycerol, purchased from Jiangsu Zhongshan Chemical Co., Ltd.,

hydroxyl number: 56, viscosity: 500;

Niax L6920, a foam stabilizer, purchased from Momentive High-tech Materials (China) Co., Ltd.;

Cyclopentane, purchased from Guangzhou Meilong Company;

Dabco Polycat 41, a polyurethane synthesis catalyst, purchased from Air Products (China) Co., Ltd.;

Dabco Polycat 5, a polyurethane synthesis catalyst, purchased from Air Products (China) Co., Ltd.;

Dabco Polycat 8, a polyurethane synthesis catalyst, purchased from Air Products (China) Co., Ltd.;

Desomdur® 44v20L, an isocyanate having an NCO content of 31.5 wt%, purchased from Covestro Polymers (China) Co., Ltd.

Test methods in the Examples are described as follows:
Molding foam: the raw materials of the foaming reaction were mixed in proportion, poured into a mold after stirring, and taken out after a set curing time to test the properties of the foam.

Test for foam pressure tank shrinkage: a foam block was placed in a 0.1 Mpa pressure vessel and the volume change rate was tested after holding for 0.5 hour.

Test for adhesion strength: a metal galvanized aluminum plate (70*150 mm) with a hole at the end in the longitudinal direction was bonded to a mold and foaming was carried out. After the foam was formed, it was taken out, and the metal hook of a tensiometer was fixed with the hole of the metal galvanized aluminum plate, and then the maximum tensile force value was measured vertically upwards. The maximum tensile force value characterizes the adhesion strength.

Test for compressive strength: according to GB8813-2008 Standard.

Test for thermal conductivity: according to GB/T10295-2008.

Test for raw material viscosity: according to GB/T 12008.8-1992 Standard.

According to the present application, the polyether polyols were in situ mixed with the blowing agents through a premixing device, and the mixture was then transported via pipelines to a site where a closed-mold mixing and infusion, together with ISO (Desmodur 44V20L), by a highpressure machine for discontinuous pre-assembled panel products were carried out. After reaching a specified demolding time, the foamed and molded polyurethane foam panel was taken out from the mold.

Table 1

Improvement of foam dimensional stability and adhesion performance

| Formulation | | | 1 | 2 | 3 | 4 | 5 | 6 | 7 |
|---|---|---|---|---|---|---|---|---|---|
| polyether 1 | Desmophen 24HK69 | pbw | 40 | 40 | 40 | 40 | 40 | 40 | 40 |
| polyether 2 | NJ4110A | pbw | 10 | 10 | 10 | 10 | 10 | 10 | 10 |
| polyether 3 | NJ 635C | pbw | 10 | 10 | 10 | 10 | 10 | 10 | 10 |
| polyether 4 | NJ380 | pbw | 40 | 40 | 40 | 40 | 40 | 40 | 40 |
| polyether 5 | ZSN 220 | pbw | | 1 | 2 | 3 | 4 | | |
| polyether 6 | ZSN 330 | pbw | | | | | | 3 | 4 |
| Silicone oil | Niax L6920 | pbw | 2 | 2 | 2 | 2 | 2 | 2 | 2 |
| Blowing catalyst | PC5 | pbw | 0.5 | 0.5 | 0.5 | 0.5 | 0.5 | 0.5 | 0.5 |
| Gelation catalyst | PC8 | pbw | 0.8 | 0.8 | 0.8 | 0.8 | 0.8 | 0.8 | 0.8 |
| Trimercatal yst | Polycat 41 | pbw | 0.7 | 0.7 | 0.7 | 0.7 | 0.7 | 0.7 | 0.7 |
| Water | WATER | wt% | 2.2 | 2.2 | 2.2 | 2.2 | 2.2 | 2.2 | 2.2 |

(continued)

| Table 1 | | | | | | | | | |
|---|---|---|---|---|---|---|---|---|---|
| Improvement of foam dimensional stability and adhesion performance | | | | | | | | | |
| Formulation | | | 1 | 2 | 3 | 4 | 5 | 6 | 7 |
| Ratio | Polyol | g | 100 | 100 | 100 | 100 | 100 | 100 | 100 |
| | cp | g | 13 | 13 | 13 | 13 | 13 | 13 | 13 |
| | 44v201 | g | 140 | 140 | 140 | 140 | 140 | 140 | 140 |
| Reactivity | Raw material temperature | °C | 20 | 20 | 20 | 20 | 20 | 20 | 20 |
| | Cream time | sec | 8 | 8 | 8 | 8 | 8 | 8 | 8 |
| | Gelation-time | sec | 57 | 57 | 58 | 59 | 60 | 59 | 60 |
| | Tack-free time | sec | 88 | 89 | 92 | 90 | 93 | 90 | 96 |
| | Free rise foaming density | kg/m 3 | 25.5 | 25.4 | 25.3 | 25.3 | 25.4 | 25.3 | 25.3 |
| Physical property | Core density | kg/m 3 | 33.2 | 33.2 | 33.1 | 33.1 | 33.3 | 33.2 | 33.2 |
| | Compress ive strength in the weakest direction | kPa | 141 | 165 | 164 | 154 | 126 | 149 | 136 |
| | Shrinkage ratio | % | 3.9 | 1.3 | 1.4 | 2.5 | 10.1 | 2.9 | 7.4 |
| | Thermal Conductivity | mW/ M.K | 19.83 | 19.80 | 19.83 | 19.89 | 19.96 | 19.85 | 19.90 |
| | Adhesion strength | N/cm 2 | 0.196 | 0.238 | 0.251 | 0.283 | 0.165 | 0.256 | 0.188 |

It can be seen from the experimental data in Table 1 that the addition of ZSN220 (a long-chain polyether polyol) or ZSN330 (a long-chain polyether polyol) to the formulation leads to, when compared with the formulation without any long-chain polyether polyol, higher foam compressive strength, smaller foam pressure tank shrinkage and higher adhesion strength.

Although the present invention has disclosed the above preferred examples, it is not intended to limit the present invention. Any person skilled in the art can make various changes and modifications without departing from the spirit and scope of the present invention. The scope of protection shall be based on the scope of the patent claims.

## Claims

**1.** A rigid polyurethane foam for a discontinuous production process made from a reaction system comprising the following components:

an isocyanate component A;
a component B comprising:

polyols B1 having a functionality of 2 to 8 and a number average molecular weight of 400 to 1500 g/mol and 1 to 7 pbw, based on component B except blowing agents, long-chain polyether polyols B2, including at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008);
blowing agents; and
catalysts.

**2.** The foam according to claim 1, wherein the isocyanate component A is poly-MDI.

**3.** The foam according to claim 1, wherein B1 further comprises:

B1-1) 60 to 90 wt%, based on the mass of component B, of a polyether polyol started with sucrose or sorbitol having a functionality of 4 to 8 and a number weight of molecular weight of 400~1500g/mol (test method according to GB/T 21863-2008);
B1-2) 10 to 40 wt%, based on the mass of component B, of a polyether polyol started with *o*-toluenediamine having a functionality of 4 and a number weight of molecular weight of 500~750g/mol (test method according to GB/T 21863-2008).

**4.** The foam according to claim 1, wherein B2 are choosing from:

B2-1) 1~5 pbw and preferably 1~3 pbw, based on the mass of component B except blowing agents, of long chain polyether polyol, having a functionality of 2, a number weight of molecular weight of 1800~4000g/mol, preferably of 1500~3000g/mol, more preferably of 1800~2500g/mol (test method according to GB/T 21863-2008).
B2-2) 1~5 pbw and preferably 1~3 pbw, based on the mass of component B except blowing agents, of long chain polyether polyol, having a functionality of 3, a number weight of molecular weight of 1800~5000g/mol, preferably of 1800~4000g/mol, more preferably of 2500~3500g/mol (test method according to GB/T 21863-2008).

**5.** The foam according to any one of claims 1 to 4, wherein the foam has a compressive strength of >110 kPa, preferably >130 kPa, and particularly preferably >140 kPa (test method according to GB 8813-2008).

**6.** The foam according to any one of claims 1 to 4, wherein the foam has a pressure tank shrinkage of <10.0%, preferably <6.0%, and particularly preferably <3.0%.

**7.** The foam according to any one of claims 1 to 4, wherein the foam has an adhesion strength of >0.20N/cm$^2$, preferably >0.24N/cm$^2$.

**8.** A polyurethane composite panel comprising two surface layers and a polyurethane foam layer located between the two surface layers, wherein the polyurethane foam is made from a polyurethane reaction system comprising the following components:

an isocyanate component A;
a component B comprising:

polyols B1 having a functionality of 2 to 8 and a number average molecular weight of 400 to 1500 g/mol and 1 to 7 pbw, based on component B except blowing agents, long-chain polyether polyols B2, including at least one long-chain polyether polyol having a functionality of 2 to 3 and a number average molecular weight of 1500 to 5000 g/mol, preferably 1500 to 3500 g/mol, and particularly preferably 1800 to 2800 g/mol (test method according to GB/T 21863-2008);
blowing agents; and
catalysts.

**9.** The composite panel according to claim 10, wherein the polyols B1 include:

B1-1) 60 to 90 wt%, based on the mass of component B, of a polyether polyol started with sucrose or sorbitol having a functionality of 4 to 8 and a number weight of molecular weight of 400~1500g/mol (test method according to GB/T 21863-2008);
B1-2) 10 to 40 wt%, based on the mass of component B, of a polyether polyol started with *o*-toluenediamine having a functionality of 4 and a number weight of molecular weight of 500~750g/mol (test method according to GB/T 21863-2008).

**10.** The composite panel according to claim 10 or 11, wherein the long-chain polyether polyols B2 are choosing from:

B2-1) 1~5 pbw and preferably 1~3 pbw, based on the mass of component B except blowing agents, of long chain polyether polyol, having a functionality of 2, a number weight of molecular weight of 1800~4000g/mol, preferably of 1500~3000g/mol, more preferably of 1800~2500g/mol (test method according to GB/T

21863-2008) .
B2-2) 1~5 pbw and preferably 1~3 pbw, based on the mass of component B except blowing agents, of long chain polyether polyol, having a functionality of 3, a number weight of molecular weight of 1800~5000g/mol, preferably of 1800~4000g/mol, more preferably of 2500~3500g/mol (test method according to GB/T 21863-2008) .

**11.** The composite panel according to claim 10 or 11, wherein the two surface layers of the composite panel are made of one or more of iron, aluminum, FRP, PS, and ABS.

**12.** A method of preparing the polyurethane composite panel according to any one of claims 10 to 14, comprising the steps of:

fixing the two surface layers; and
injecting the polyurethane reaction system between the two surface layers, wherein the polyurethane composite panel is obtained after reaction, foaming and molding of the polyurethane reaction system.

**13.** The method according to claim 15, wherein the two surface layers are fixed by a mold containing an upper cover and a lower cover, and the two surface layers are respectively fixed on the inner surface of the upper cover and on the inner surface of the lower cover.

**14.** Use of the rigid polyurethane foam according to any one of claims 1 to 9 for producing an insulation device.

**15.** An insulation device comprising the polyurethane foam according to any one of claims 1-7.

Europäisches Patentamt
European Patent Office
Office européen des brevets

# EUROPEAN SEARCH REPORT

Application Number
EP 18 18 4332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 335 378 B1 (COLMAN LUC FERDINAND LEON [BE]) 1 January 2002 (2002-01-01)<br>* column 1, line 14 *<br>* table 1 * | 1-15 | INV.<br>C08G18/48<br>C08G18/50<br>C08G18/76 |
| X<br><br>A | EP 0 905 160 A1 (BASF AG [DE])<br>31 March 1999 (1999-03-31)<br>* table on page 7;<br>examples 2,5 *<br>* paragraph [0006] * | 1-7,14,<br>15<br>8-13 | |

TECHNICAL FIELDS SEARCHED (IPC)
C08G

The present search report has been drawn up for all claims

1

| Place of search | Date of completion of the search | Examiner |
|---|---|---|
| Munich | 9 January 2019 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 18 4332

This annex lists the patent family members relating to the patent documents cited in the above-mentioned European search report. The members are as contained in the European Patent Office EDP file on The European Patent Office is in no way liable for these particulars which are merely given for the purpose of information.

09-01-2019

| Patent document cited in search report | Publication date | Patent family member(s) | Publication date |
|---|---|---|---|
| US 6335378 B1 | 01-01-2002 | AR 017144 A1 | 22-08-2001 |
| | | AU 740991 B2 | 22-11-2001 |
| | | BR 9812508 A | 25-07-2000 |
| | | CA 2300890 A1 | 01-04-1999 |
| | | CN 1270608 A | 18-10-2000 |
| | | DE 69801835 T2 | 11-04-2002 |
| | | EG 21433 A | 31-10-2001 |
| | | EP 1019449 A1 | 19-07-2000 |
| | | ES 2165194 T3 | 01-03-2002 |
| | | HU 0003816 A2 | 28-03-2001 |
| | | ID 24457 A | 20-07-2000 |
| | | JP 2002505345 A | 19-02-2002 |
| | | KR 20010024270 A | 26-03-2001 |
| | | NZ 503024 A | 01-03-2002 |
| | | PL 339565 A1 | 18-12-2000 |
| | | SK 4292000 A3 | 14-08-2000 |
| | | TR 200000754 T2 | 21-11-2000 |
| | | US 6121338 A | 19-09-2000 |
| | | US 6335378 B1 | 01-01-2002 |
| | | WO 9915581 A1 | 01-04-1999 |
| EP 0905160 A1 | 31-03-1999 | AT 290558 T | 15-03-2005 |
| | | CA 2245306 A1 | 24-03-1999 |
| | | CN 1217349 A | 26-05-1999 |
| | | DE 19742011 A1 | 25-03-1999 |
| | | EP 0905160 A1 | 31-03-1999 |
| | | ES 2238742 T3 | 01-09-2005 |
| | | JP H11158369 A | 15-06-1999 |
| | | US 6274642 B1 | 14-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102875833 A
- CN 103819644 A
- CN 104672426 A